# EUROPÄISCHE PATENTANMELDUNG

(11) **EP 1 437 847 A1**
(43) Veröffentlichungstag der Anmeldung: **14.07.2004**
(21) Anmeldenummer: 03000341.2
(22) Anmeldetag: 09.01.2003
(51) Int. Cl.: H04B 7/26

(54) **Verfahren und Funkstation zur Übertragung von Informationen**

(71) Anmelder: SIEMENS AKTIENGESELLSCHAFT, 80333 München (DE)
(72) Erfinder: Ritter, Gerhard, 86943 Thaining (DE)

(57) **Zusammenfassung**

Die Erfindung betrifft ein Verfahren zur Übertragung von Informationen über eine Luftschnittstelle in einem Funkkommunikationssystem, umfassend mindestens eine Basisstation und mindestens eine Teilnehmerstation, wobei Informationen in Aufwärtsrichtung (UL) von der mindestens einen Teilnehmerstation zu der mindestens einen Basisstation und in Abwärtsrichtung (DL) von der mindestens einen Basisstation zu der mindestens einen Teilnehmerstation übertragen werden, und wobei in dem Funkkommunikationssystem zur Übertragung von Informationen von und zu der mindestens einen Basisstation ein gepaartes Frequenzband bestehend aus einem ersten und einem zweiten Frequenzband (FB1, FB2) eingesetzt wird. Erfindungsgemäß werden auf dem ersten Frequenzband (FB1) Informationen in einer Richtung (UL; DL) übertragen und auf dem zweiten Frequenzband (FB2) werden Informationen zeitweilig in der einen und zeitweilig in der anderen Richtung (UL; DL) übertragen.

Das erfindungsgemäße Verfahren erlaubt eine effiziente Ausnutzung von Funkressourcen bei asymmetrischem Datenverkehr.

## Beschreibung

Die Erfindung betrifft ein Verfahren zur Übertragung von Informationen über eine Luftschnittstelle in einem Funkkommunikationssystem nach dem Oberbegriff des Anspruchs 1.

Weiterhin betrifft die Erfindung eine Funkstation für ein Funkkommunikationssystem zum Senden und Empfangen von Informationen über eine Luftschnittstelle nach dem Oberbegriff des Anspruchs 8 und eine Vorrichtung in einem Funkkommunikationssystem nach dem Oberbegriff des Anspruchs 10.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Luftschnittstelle zwischen sendender und empfangender Funkstation übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen, z.B. Node B's, sowie weitere netzseitige Einrichtungen. Bei einer Übertragung von Informationen von einer Basisstation zu einer Teilnehmerstation spricht man von einer Übertragung in Abwärtsrichtung, bei einer Übertragung von Informationen von einer Teilnehmerstation zu einer Basisstation von einer Übertragung in Aufwärtsrichtung.

Der Zugriff von Stationen auf das gemeinsame Übertragungsmedium wird bei diesen Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Stationen aufgeteilt werden. Dabei findet häufig (zum Beispiel bei GSM, TETRA (Terrestrial Trunked Radio), DECT (Digital European Cordless Telephone), UMTS (Universal Mobile Telecommunications System) eine Unterteilung des Übertragungsmediums in Frequenz- und/oder Zeitkanäle entsprechend der Luftschnittstelle statt. Auch Kombinationen mehrerer dieser Verfahren werden angewendet. Um einen sparsamen Umgang mit den knappen Funkressourcen zu ermöglichen, befinden sich in Funkkommunikationssystemen Einrichtungen, wie z.B. Steuereinrichtungen, welche die Funkressourcen verwalten bzw. eine Ressourcenzuteilung vornehmen. Die Ressource einer Funkschnittstelle kann hierbei zum Beispiel ein Zeitschlitz-Frequenz-Paar oder auch nur eines von beiden (Zeitschlitz oder Frequenz) sein.

Eine Betriebsart, bei der Sende- und Empfangsbetrieb möglich ist, nennt man Duplex. Üblicherweise werden zwei Verfahren angewandt, um dies zu realisieren: FDD (Frequency Division Duplex) oder TDD (Time Division Duplex). Bei FDD werden die Kanäle für die beiden Übertragungsrichtungen auf zwei verschiedenen Frequenzen realisiert, welches z.B. bei GSM eingesetzt wird. Bei TDD hingegen handelt es sich um ein Duplexverfahren, bei dem dieselbe Frequenz für die zwei Kanäle einer Verbindung, aber zu verschiedenen Zeiten genutzt wird.

Typischerweise wurden den Netzwerkbetreibern gepaarte Frequenzbänder, d.h. zwei Frequenzbänder typischerweise gleicher Bandbreite mit einem Frequenzabstand zugewiesen. Diese gepaarten Frequenzbänder werden dann in der Regel im Rahmen von FDD Verfahren eingesetzt. Hierbei ist der gleiche Umfang an Funkressourcen für die Aufwärts- und die Abwärtsrichtung verfügbar. Diese Zuordnung der Funkressourcen zu den Übertragungsrichtungen eignet sich für symmetrische Dienste, bei welchen ein ähnlicher Umfang an Informationen in Aufwärtswie in Abwärtsrichtung übermittelt wird. Ein Beispiel für derartige symmetrische Dienste stellen Sprachverbindungen dar. Eine Vielzahl von Diensten, wie z.B. die Informationsübertragung aus dem Internet, weisen jedoch eine Asymmetrie zwischen den Datenmengen in der Aufwärts- und in der Abwärtsrichtung auf. In der Regel wird bei derartigen Diensten die Aufwärtsverbindung im Vergleich zur Abwärtsverbindung nur wenig genutzt. Je asymmetrischer die Dienste sind, desto weniger ausgelastet ist bei FDD das Frequenzband, welches zur Übertragung in Aufwärtsrichtung verwendet wird. Die Gesamtkapazität des Kommunikationssystems wird daher durch die Abwärtsrichtung bestimmt, während für die Aufwärtsrichtung gleichzeitig freie Ressourcen zur Verfügung stehen. Das gesamte Spektrum der Funkressourcen kann im Fall asymmetrischer Informationsübertragung dann nicht effizient genutzt werden.

Über den genauen Wert der Asymmetrie aktueller und zukünftig zu erwartender Dienste liegen keine einheitlichen und verlässlichen Angaben vor. Diese Unsicherheit speziell bezüglich der zukünftigen Entwicklung der Asymmetrie stellt für Netzwerkbetreiber ein Risiko dar, da die Effizienz der Nutzung der Funkressourcen erheblich von der Aufteilung dieser Ressourcen in solche für Aufwärts- und solche für Abwärtsverbindungen abhängt.

Bisher existieren mehrere Vorschläge zur Verwendung von Funkressourcen im Hinblick auf asymmetrische Dienste. Der erste dieser Vorschläge beinhaltet, der Abwärtsrichtung einen gröβeren Umfang an Frequenzbandbreite zuzuordnen als der Aufwärtsrichtung, d.h. das Frequenzspektrum wird asymmetrisch verteilt. Hierzu wird ein festes Verhältnis zwischen dem Umfang an Abwärts- und Aufwärtsrichtungsressourcen bestimmt, so z.B. 2:1. Als nachteilig an diesem Verfahren erweist sich, dass die Ausnutzung der Funkressourcen nur für einen bestimmten Wert der Asymmetrie, welcher genau an die Aufteilung der Funkressourcen in Aufwärts- und Abwärtsrichtungsressourcen angepasst ist, optimal ist. Weiterhin scheint sich der Übergang von der aktuellen Nutzung des Spektrums durch gepaarte Frequenzbänder gleicher Bandbreite im Rahmen von FDD Systemen zu einer asymmetrischen Spektrumsaufteilung als aufwendig zu gestalten.

Ein zweiter Vorschlag besteht darin, unterschiedliche Modulationsverfahren für die beiden Übertragungsrichtungen zu verwenden. So könnte für die Aufwärtsrichtung QAM (Quadrature Amplitude Modulation) und für die Abwärtsrichtung 16-PSK (Phase Shift Keying) eingesetzt werden. Hierbei werden allerdings die Ressourcen in Aufwärtsrichtung weniger effizient genutzt als diejenigen in Abwärtsrichtung, da die Modulation in Aufwärtsrichtung auf die gleiche Weise gesteigert werden könnte wie diejenige in Abwärtsrichtung. Daher wird das Problem der ineffizienten Nutzung der Funkressourcen durch diesen Vorschlag nicht gelöst.

Schließlich kann als dritter Vorschlag die Verwendung von TDD Systemen angeführt werden. Aufgrund der Flexibilität des Umschaltpunktes (switching point) zwischen den Zeitschlitzen für die Aufwärts- und denjenigen für die Abwärtsübertragung kann innerhalb von TDD Systemen verschiedenen Asymmetriewerten Rechnung getragen werden. Jedoch liegt aktuell der Sachverhalt vor, dass ein Großteil des Frequenzspektrums für die mobile Kommunikation als gepaarte Frequenzbänder vergeben wurde. Dies liegt darin begründet, dass zum Zeitpunkt der Verteilung der Funkressourcen das Problem der Asymmetrie von Diensten nicht zur Diskussion stand.

Eine Lösung des Problems, welches sich aufgrund der Asymmetrie vieler Dienste in Verbindung mit gepaarten Frequenzbändern stellt, sollte vorteilhafterweise einer Reihe von Bedingungen genügen:
- Keine Neuzuteilung des Frequenzspektrums sollte nötig sein.
- Verschiedenste Dienste mit ihren spezifischen Anforderungen an die Funkressourcen sollten Berücksichtigung finden.
- Unterschiedliche Asymmetriewerte, welche auch Veränderungen mit der Zeit oder mit dem Ort unterliegen können, sollten unterstützt werden.
- Eine Kompatibilität mit existierenden Systemen sollte möglich sein.

Der Erfindung liegt die Aufgabe zugrunde, ein Verfahren, eine Funkstation und ein Vorrichtung in einem Funkkommunikationssystem der eingangs genannten Art aufzuzeigen, welche einen effizienten Umgang mit den knappen Funkressourcen trotz asymmetrischer Dienste bei Verwendung von gepaarten Frequenzbändern ermöglichen.

Diese Aufgabe wird in Bezug auf das Verfahren durch das Verfahren mit den Merkmalen des Anspruchs 1 gelöst.

Vorteilhafte Ausgestaltungen und Weiterbildungen des erfindungsgemäßen Verfahrens sind Gegenstand der Unteransprüche.

Zur Übertragung von Informationen von und zu der Basisstation wird in dem Funkkommunikationssystem ein gepaartes Frequenzband bestehend aus einem ersten und einem zweiten Frequenzband eingesetzt. Erfindungsgemäß werden auf dem ersten Frequenzband Informationen in einer Richtung übertragen und auf dem zweiten Frequenzband werden Informationen zeitweilig in der einen und zeitweilig in der anderen Richtung übertragen.

In dem erfindungsgemäßen Verfahren werden also genau zwei Frequenzbänder zur Kommunikation in dem Funkkommunikationssystem verwendet. Ein gepaartes Frequenzband zeichnet sich dadurch aus, dass zumindest zeitweise Informationen gleichzeitig in Aufwärtsrichtung und in Abwärtsrichtung übertragen werden können.

Eine Teilnehmerstation kann mit der Basisstation über ein Frequenzband oder über zwei Frequenzbänder kommunizieren. Findet die Kommunikation über zwei Frequenzbänder statt, so können diese nacheinander oder gleichzeitig eingesetzt werden. Dabei müssen die Informationen, welche zwischen der Basisstation und den mit ihr kommunizierenden Teilnehmerstationen ausgetauscht werden, derart übertragen werden, dass auf dem ersten Frequenzband Informationen in einer Richtung und auf dem zweiten Frequenzband Informationen zeitweilig in der einen und zeitweilig in der anderen Richtung übertragen werden. Dies kann z.B. dadurch realisiert werden, dass die Basisstation mit einer ersten Teilnehmerstation auf dem ersten Frequenzband in Aufwärtsrichtung kommuniziert und auf dem zweiten Frequenzband in Abwärtsrichtung. Nachdem die erste Teilnehmerstation den Funkabdeckungsbereich der Basisstation verlassen hat, kommuniziert die Basisstation dann mit einer zweiten Teilnehmerstation auf beiden Frequenzbändern in Aufwärtsrichtung. Ein weiteres Beispiel wäre die Kommunikation der Basisstation mit einer Teilnehmerstation, wobei das erste Frequenzband für die Kommunikation in Aufwärtsrichtung und das zweite Frequenzband abwechselnd für die Kommunikation in Aufwärts- und in Abwärtsrichtung eingesetzt wird. Hierzu lassen sich zahlreiche weitere Beispiele finden, wobei jeweils gelten muss, dass die gesamte Kommunikation zwischen der Basisstation und einer oder mehreren Teilnehmerstationen über einen Zeitraum hinweg die Bedingung erfüllen muss, dass auf dem ersten Frequenzband Informationen in einer Richtung und auf dem zweiten Frequenzband Informationen zeitweilig in der einen und zeitweilig in der anderen Richtung übertragen werden.

Bei den beiden Richtungen, in welche Informationen übertragen werden, kann es sich um die Aufwärtsrichtung und um die Abwärtsrichtung handeln. Gemäß einer Ausgestaltung der Erfindung werden auf dem ersten Frequenzband Informationen in der Abwärtsrichtung übertragen. Somit steht ein ganzes Frequenzband, nämlich das erste Frequenzband, ausschließlich für die Abwärtsrichtung zur Verfügung. Hingegen werden auf dem zweiten Frequenzband Informationen sowohl in der Aufwärts-, als auch in der Abwärtsrichtung übertragen. Auf dem ersten Frequenzband die Informationen nur in der Abwärtsrichtung zu übertragen, hat den Vorteil, dass einem größeren Volumen an Daten in der Abwärtsrichtung im Vergleich zu dem Volumen an Daten in der Aufwärtsrichtung Rechnung getragen werden kann. Ein Beispiel hierfür ist das Herunterladen von Daten aus dem Internet. Es ist jedoch auch möglich, dass auf dem ersten Frequenzband Informationen nur in der Aufwärtsrichtung übertragen werden. Diese Konstellation ist für den Fall geeignet, dass eine derartige Asymmetrie bei der Nachfrage nach Funkressourcen vorliegt, dass mehr Bedarf an Funkressourcen für die Aufwärtsrichtung als für die Abwärtsrichtung besteht.

Die Vorteile des erfindungsgemäßen Verfahrens können z.B. darin bestehen, dass
- verschiedenen Werten für die Asymmetrie, welche mit der Zeit und dem Ort schwanken können, Rechnung getragen wird,
- die Spektrumsausnutzung der Funkressourcen in einem großen Bereich von Asymmetriewerten nahe bei 100 Prozent liegt,
- keine Neuverteilung des Funkspektrums erforderlich ist,
- verschiedenartige Dienste einbezogen werden können,
- eine Kompatibilität zu vorhanden Systemen vorliegt,
- eine Koexistenz von verschiedenen Systemen und Standards erleichtert wird,
- auf Seiten der Netzwerkbetreiber eine Kosteneinsparung und eine Risikoverminderung zu erwarten ist.

In einer Weiterbildung der Erfindung weisen das erste und das zweite Frequenzband die gleiche Zeitschlitzstruktur auf. Es ist jedoch auch möglich, dass das erste und das zweite Frequenzband eine unterschiedliche Zeitschlitzstruktur aufweisen. Dies kann zum Beispiel dann gegeben sein, wenn die beiden Frequenzbänder nach unterschiedlichen Funkkommunikationsstandards betrieben werden. Zum Beispiel könnte es sich bei dem ersten Frequenzband um ein CDMA-Band handeln und bei dem zweiten um ein TDMA-Band.

In einer Ausgestaltung der Erfindung wird auf dem zweiten Frequenzband ein gleiches Volumen an Informationen in eine Richtung im Vergleich zur anderen Richtung übertragen. Dies kann zum Beispiel dadurch realisiert werden, dass sich Zeitschlitze, welche für die Aufwärtsrichtung genutzt werden, mit Zeitschlitzen welche für die Abwärtsrichtung genutzt werden, regelmäßig abwechseln.

Vorteilhafterweise wird auf dem zweiten Frequenzband ein ungleiches Volumen an Informationen in eine Richtung im Vergleich zur anderen Richtung übertragen. Dies erlaubt es zum Beispiel, auf dem zweiten Frequenzband mehr Daten in der Abwärtsrichtung zu übertragen als in der Aufwärtsrichtung. In Verbindung mit einer Verwendung des ersten Frequenzbandes für die Abwärtsrichtung kann dies einer starken Asymmetrie Rechnung tragen. Die Aufteilung des zweiten Frequenzbandes in die Aufwärts- und die Abwärtsrichtung kann mit der Zeit variieren. So kann zum Beispiel während einer bestimmten Zeitspanne ein gleiches Volumen an Informationen in die eine im vergleich zur anderen Richtung übertragen werden, und danach ein ungleiches Volumen. Auch innerhalb der Zeitspanne, während welcher ein ungleiches Volumen in die beiden Richtungen übertragen wird, kann das Verhältnis des Datenvolumens, welches in Aufwärtsrichtung übertragen wird, zu dem Volumen der Daten, welche in Abwärtsrichtung übertragen werden, schwanken. Dies ermöglicht eine flexible Anpassung des Funkkommunikationssystems an den Ressourcenbedarf, d.h. an die Nachfrage der Teilnehmer.

Die obige Aufgabe wird im Hinblick auf die Funkstation für ein Funkkommunikationssystem durch eine Funkstation mit den Merkmalen des Anspruchs 8 gelöst.

Erfindungsgemäß weist die Funkstation einen Sender zum Senden von Informationen oder einen Empfänger zum Empfangen vom Informationen auf dem ersten Frequenzband auf, und weiterhin weist die Funkstation einen Sender zum zeitweiligen Senden von Informationen und einen Empfänger zum zeitweiligen Empfangen von Informationen auf dem zweiten Frequenzband, sowie einen Sende-/Empfangsumschalter auf.

Diese Funkstation kann sowohl als Basisstation, als auch als Teilnehmerstation ausgestaltet sein. Entsprechende Mittel zur Durchführung der Verfahrensschritte nach den Ansprüchen 1 bis 7 können vorgesehen sein.

Die oben genannte Aufgabe wird hinsichtlich der Vorrichtung in einem Funkkommunikationssystem durch eine Vorrichtung mit den Merkmalen des Anspruchs 10 gelöst.

Erfindungsgemäß weist die Vorrichtung Mittel zum Zuweisen einer Übertragungsrichtung für das zweite Frequenzband auf. Somit kann die Vorrichtung entscheiden, wann Informationen auf dem zweiten Frequenzband in Aufwärtsrichtung bzw. in Abwärtsrichtung übertragen werden. Geeignete Mittel zur Durchführung der Verfahrensschritte nach den Ansprüchen 1 bis 7 können in der Vorrichtung vorgesehen sein.

Einzelheiten und Details der Erfindung werden anhand eines Ausführungsbeispiels erläutert. Dabei zeigt
- Figur 1:: die erfindungsgemäße Verwendung eines gepaarten Frequenzbandes,
- Figur 2:: ein Blockdiagramm einer erfindungsgemäßen Basisstation,
- Figur 3:: ein Blockdiagramm einer erfindungsgemäßen Teilnehmerstation und
- Figur 4:: einen Teil eines erfindungsgemäßen Funkkommunikationssystems.

Es wird ein Funkkommunikationssystem mit einem gepaarten Frequenzband betrachtet. Im folgenden wird davon ausgegangen, dass eine derartige Asymmetrie vorliegt, dass ein größerer Umfang an Funkressourcen in Abwärtsrichtung benötigt wird als in Aufwärtsrichtung.

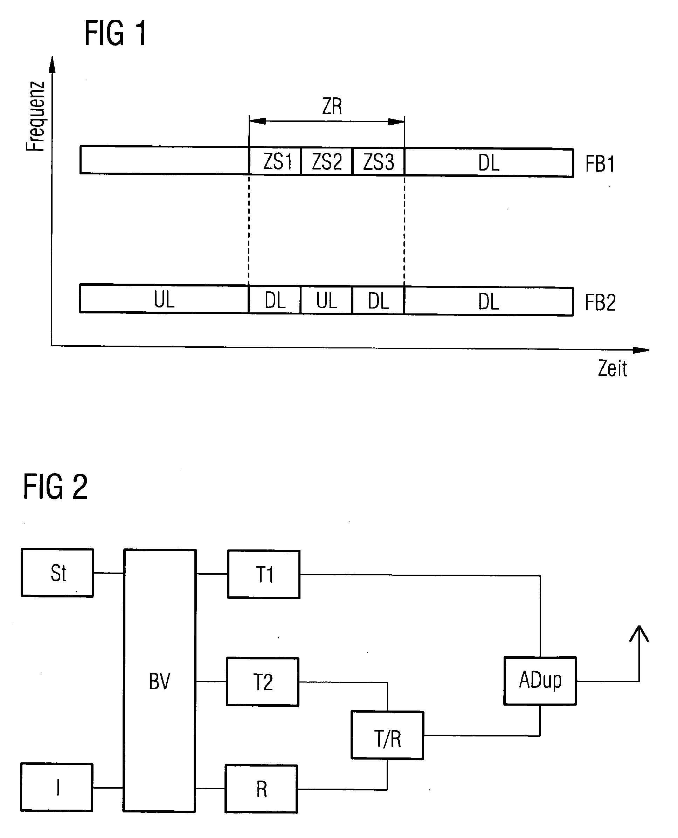

Das erfindungsgemäße Verfahren wird anhand eines Systems mit einer Zeitschlitzstruktur erläutert. Figur 1 zeigt ein gepaartes Frequenzband, bestehend aus einem ersten Frequenzband FB1 und einem zweiten Frequenzband FB2. Die Frequenz ist hierbei auf der vertikalen, die Zeit auf der horizontalen Achse aufgetragen. Eine zeitliche Untergliederung erfolgt durch Zeitrahmen. Beispielhaft ist in Figur 1 ein Zeitrahmen ZR dargestellt. Er beinhaltet drei Zeitschlitze ZS1, ZS2 und ZS3. Die beschriebene Zeitschlitzstruktur ist identisch für die beiden Frequenzbänder FB1 und FB2. Üblicherweise wird in einem FDD System das erste Frequenzband FB1 für die Abwärtsrichtung DL und das zweite Frequenzband FB2 für die Aufwärtsrichtung UL verwendet. Auch in Figur 1 wird das erste Frequenzband FB1 ausschließlich für die Abwärtsrichtung DL eingesetzt. Aufgrund der Asymmetrie limitieren in einem FDD System die Abwärtsressourcen die Ressourcenausnutzung, während nicht alle Zeitschlitze des üblicherweise für die Aufwärtsverbindungen genutzten zweiten Frequenzbandes FB2 ausgelastet sind. Derartige unbenutzte Zeitschlitze werden dann erfindungsgemäß für die Übertragung von Informationen in Abwärtsrichtung DL verwendet. In Figur 1 betrifft dies innerhalb des Zeitrahmens ZR den ersten Zeitschlitz ZS1 und den dritten Zeitschlitz ZS3. In Figur 1 ist angedeutet, dass zeitlich darauffolgende Zeitschlitze des nächsten Zeitrahmens auch für die Abwärtsrichtung DL verwendet werden können. Insgesamt werden durch die Verwendung von Zeitschlitzen des zweiten Frequenzbandes FB2 für die Abwärtsrichtung DL mehr Zeitschlitze zur Übertragung von Informationen in Abwärtsrichtung eingesetzt als bei dem herkömmlichen FDD System, die Ausnutzung der Funkressourcen wird also gesteigert.

Die Anzahl der Zeitschlitze des zweiten Frequenzbandes FB2, welche für die Abwärtsrichtung DL zur Verfügung gestellt werden, kann situationsabhängig nach Bedarf eingestellt werden. Es liegt daher eine große Flexibilität bezüglich des Verhältnisses der für die Aufwärts- und für die Abwärtsrichtung verwendeten Funkressourcen vor. Zusätzlich zum erfindungsgemäßen Verfahren wäre auch ein symmetrisches Datenaufkommen handhabbar. Im betrachteten Beispiel werden ausschließlich ganze Zeitschlitze des zweiten Frequenzbandes FB2 für die Abwärtsrichtung DL zur Verfügung gestellt. Dies führt dazu, dass der Wert für die Spektrumsausnutzung von dem Wert der Asymmetrie abhängt. Für einige Asymmetriewerte liegt die Spektrumsausnutzung bei 100 Prozent, für andere einige Prozentpunkte darunter.

Das beschriebene Verfahren entspricht einer Kombination der Duplex Verfahren FDD und TDD. Im beschriebenen Beispiel wurde das erfindungsgemäße Verfahren mit einem FDD Verfahren verglichen. Im Gegensatz zu dem FDD Verfahren werden erfindungsgemäß einige Zeitschlitze eines Frequenzbandes für die Übertragungsrichtung des anderen Frequenzbandes verwendet werden. Das erfindungsgemäße Verfahren kann aber auch mit einem TDD System verglichen werden. Gegenüber dem TDD System liegt ein zusätzliches Frequenzband vor, welches ausschließlich zur Übertragung in Abwärtsrichtung verwendet wird.

Obwohl dem Ausführungsbeispiel die Annahme zugrunde gelegt wurde, dass ein größerer Umfang an Ressourcen in Abwärtsrichtung benötigt wird als in Aufwärtsrichtung, ist es dennoch möglich, manchen Teilnehmerstationen mehrere Zeitschlitze zur Übertragung in Aufwärtsrichtung als zur Übertragung in Abwärtsrichtung zur Verfügung zu stellen. Lediglich im Mittel werden den Teilnehmerstationen ein größerer Umfang an Ressourcen in Abwärtsrichtung zugewiesen als in Aufwärtsrichtung.

Figur 2 zeigt ein Blockdiagramm einer erfindungsgemäßen Basisstation. Eine Schnittstelle I verbindet die Basisstation mit anderen Einrichtungen. Neben einem Steuerblock St zu Kontrollzwecken und einem Block BV zur Basisbandverarbeitung, welcher die üblichen Schritte der digitalen Signalverarbeitung durchführt, weist die Basisstation eine Sendeeinheit T1, eine Sendeeinheit T2, sowie eine Empfangseinheit R auf. Die Sendeeinheit T2 und die Empfangseinheit R sind über einen Sende- Empfangsumschalter T/R an einen Antennenduplexer ADup angeschlossen, welcher die beiden unterschiedlichen Frequenzbereiche entkoppelnd trennt und an eine Sende- und Empfangsantenne angeschlossen ist. Die Sendeeinheit T1 sendet Informationen auf dem ersten Frequenzband, welches nur für die Abwärtsrichtung verwendet wird. Die Sendeeinheit T2 und die Empfangseinheit R hingegen senden und empfangen Informationen auf dem zweiten Frequenzband, auf welchem Informationen in beiden Richtungen übertragen werden. Im Vergleich zu einer Basisstation eines FDD Systems liegt die zusätzliche Sendeeinheit T2 vor. Im Gegensatz zu einem TDD Systems ist zusätzlich die Sendeeinheit T1 vorhanden. Betrachtet man ein System, bei welchem die Asymmetrie derartig ausgestaltet ist, dass ein größerer Umfang an Ressourcen in Aufwärtsrichtung benötigt wird als in Abwärtsrichtung, so muss die Sendeeinheit T1 durch eine Empfangseinheit ersetzt werden. Verändert sich die Asymmetrie, so dass zeitweilig der Bedarf an Abwärtsressourcen und zeitweilig der Bedarf an Aufwärtsressource überwiegt, so ist es auch möglich, in den oberen Ast der Figur 2 sowohl eine Sendeeinheit als auch eine Empfangseinheit zu integrieren.

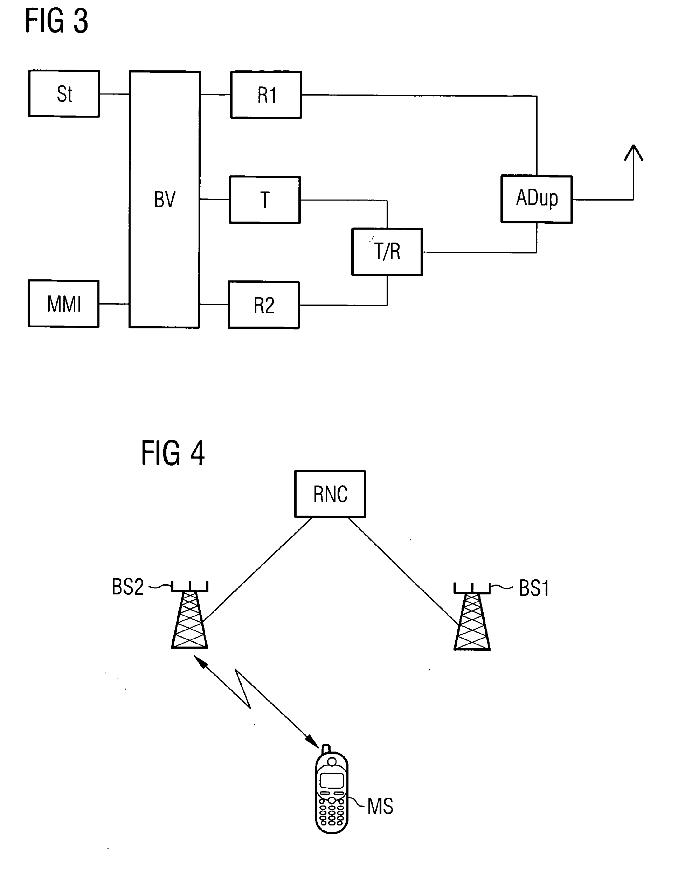

Figur 3 zeigt ein Blockdiagramm einer erfindungsgemäßen Teilnehmerstation. Eine Schnittstelle MMI (Man Machine Interface) verbindet die Teilnehmerstation mit dem Benutzer. Die Teilnehmerstation besteht bis auf die Sende- und -Empfangeinrichtungen aus den gleichen funktionalen Blöcken St, BV, T/R und Adup wie die Basisstation der Figur 2. Die Teilnehmerstation weist jedoch eine Sendeeinheit T, sowie eine Empfangseinheit R1 und eine weitere Empfangseinheit R2 auf. Die Empfangseinheit R1 empfängt Informationen auf dem ersten Frequenzband, welches nur für die Abwärtsrichtung verwendet wird. Die Empfangseinheit R2 und die Sendeeinheit T hingegen empfangen und senden Informationen auf dem zweiten Frequenzband, auf welchem Informationen in beiden Richtungen übertragen werden. Im Vergleich zu einer Teilnehmerstation eines FDD Systems liegt die zusätzliche Empfangseinheit R2 vor. Im Gegensatz zu einem TDD Systems ist zusätzlich die Empfangseinzeit R1 vorhanden. Betrachtet man ein System, bei welchem die Asymmetrie derartig ausgestaltet ist, dass ein größerer Umfang an Ressourcen in Aufwärtsrichtung benötigt wird als in Abwärtsrichtung, so muss die Empfangseinheit R1 durch eine Sendeeinheit ersetzt werden. Verändert sich die Asymmetrie, so dass zeitweilig der Bedarf an Abwärtsressourcen und zeitweilig der Bedarf an Aufwärtsressource überwiegt, so ist es auch möglich, in den oberen Ast der Figur 3 sowohl eine Sendeeinheit als auch eine Empfangseinheit zu integrieren.

Bisher wurde davon ausgegangen, dass die beiden Frequenzbänder die gleiche Zeitschlitzstruktur aufweisen. Dies ist jedoch zur Durchführung des erfindungsgemäßen Verfahrens nicht notwendigerweise erforderlich. So ist es möglich, für das erste Frequenzband zur Übertragung in nur eine Richtung ein CDMA Verfahren wie IMT-DS, IMT-MC oder HDR einzusetzen und für das zweite Frequenzband ein TDD System wie IMT-2000 zu verwenden.

Von großem Vorteil ist es, dass die betrachteten Basis- und Teilnehmerstationen mit existierenden Systemen kompatibel sind. Im Falle einer einheitlichen Zeitschlitzstruktur für beide Frequenzbänder sind herkömmliche Basisstationen in der Lage, sowohl mit herkömmlichen Teilnehmerstationen als auch mit erfindungsgemäßen Teilnehmerstationen nach dem erfindungsgemäßen Verfahren zu kommunizieren. Weiterhin können erfindungsgemäße Basisstationen mit erfindungsgemäßen Teilnehmerstationen nach dem erfindungsgemäßen Verfahren und mit herkömmlichen Teilnehmerstationen kommunizieren.

Ein weiterer Vorteil betrifft die Koexistenz von verschiedenen Mobilfunkstandards wie z.B. UTRA TDD und UTRA FDD. Dies beruht darauf, dass eine erfindungsgemäße Teilnehmerstation auf zwei verschiedenen Frequenzbändern Informationen empfangen kann. Falls eine solche Teilnehmerstation auf einem der beiden zum Empfang von Informationen genutzten Frequenzbänder eine erhöhte Störung erfährt, so kann durch einen Wechsel zu dem anderen Frequenzband versucht werden, dies zu umgehen. Dies würde die Qualität der empfangenen Daten verbessern.

Figur 4 zeigt einen Teil eines erfindungsgemäßen Funkkommunikationssystems. Er besteht aus einer ersten Basisstation BS1 und einer zweiten Basisstation BS2, sowie einer Teilnehmerstation in Form eines Mobiltelefons MS und einer Vorrichtung RNC zur Steuerung und Kontrolle der Basisstationen BS1 und BS2. Die Vorrichtung RNC ist mit den Basisstationen BS1 und BS2 über eine Funkschnittstelle oder auch über Kabel verbunden. Die beiden Basisstationen BS1 und BS2 verwenden ein gepaartes Frequenzband zur Kommunikation mit dem Mobiltelefon MS.

Während auf dem ersten der beiden Frequenzbänder Informationen ausschließlich in der Abwärtsrichtung übertragen werden, steht das zweite Frequenzband sowohl für die Aufwärts- als auch für die Abwärtsrichtung zur Verfügung. Die Vorrichtung RNC weist die Basisstationen BS1 und BS2 an, zu welchen Zeiten auf dem zweiten Frequenzband Informationen in die Aufwärts- oder in die Abwärtsrichtung übertragen werden. Diese Aufteilung des zweiten Frequenzbandes in Ressourcen für die Aufwärts- und Ressourcen für die Abwärtsrichtung kann sich für die beiden Basisstationen BS1 und BS2 unterscheiden. Weiterhin kann die Aufteilung auch mit der Zeit variieren.

## Patentansprüche

1. Verfahren zur Übertragung von Informationen über eine Luftschnittstelle in einem Funkkommunikationssystem, umfassend mindestens eine Basisstation und mindestens eine Teilnehmerstation,
wobei Informationen in Aufwärtsrichtung (UL) von der mindestens einen Teilnehmerstation zu der mindestens einen Basisstation und in Abwärtsrichtung (DL) von der mindestens einen Basisstation zu der mindestens einen Teilnehmerstation übertragen werden,
wobei in dem Funkkommunikationssystem zur Übertragung von Informationen von und zu der mindestens einen Basisstation ein gepaartes Frequenzband bestehend aus einem ersten und einem zweiten Frequenzband (FB1, FB2) eingesetzt wird,
**dadurch gekennzeichnet,**
**dass** auf dem ersten Frequenzband (FB1) Informationen in einer Richtung (UL; DL) übertragen werden und
**dass** auf dem zweiten Frequenzband (FB2) Informationen zeitweilig in der einen und zeitweilig in der anderen Richtung (UL; DL) übertragen werden.

2. Verfahren nach Anspruch 1, **dadurch gekennzeichnet,**
**dass** auf dem ersten Frequenzband (FB1) Informationen in der Abwärtsrichtung (DL) übertragen werden.

3. Verfahren nach Anspruch 1, **dadurch gekennzeichnet,**
**dass** auf dem ersten Frequenzband (FB1) Informationen in der Aufwärtsrichtung (UL) übertragen werden.

4. Verfahren nach einem der Ansprüche 1 bis 3, **dadurch gekennzeichnet,**
**dass** das erste und das zweite Frequenzband (FB1, FB2) die gleiche Zeitschlitzstruktur aufweisen.

5. Verfahren nach einem der Ansprüche 1 bis 3, **dadurch gekennzeichnet,**
**dass** das erste und das zweite Frequenzband (FB1, FB2) eine unterschiedliche Zeitschlitzstruktur aufweisen.

6. Verfahren nach einem der Ansprüche 1 bis 5, **dadurch gekennzeichnet,**
**dass** auf dem zweiten Frequenzband (FB2) ein gleiches Volumen an Informationen in eine Richtung (UL; DL) im Vergleich zur anderen Richtung (DL; UL) übertragen wird.

7. Verfahren nach einem der Ansprüche 1 bis 5, **dadurch gekennzeichnet,**
**dass** auf dem zweiten Frequenzband (FB2) ein ungleiches Volumen an Informationen in eine Richtung (UL; DL) im Vergleich zur anderen Richtung (DL; UL) übertragen wird.

8. Funkstation für ein Funkkommunikationssystem zum Senden und Empfangen von Informationen über eine Luftschnittstelle,
wobei zur Übertragung von Informationen ein gepaartes Frequenzband bestehend aus einem ersten und einem zweiten Frequenzband (FB1, FB2) eingesetzt wird,
**dadurch gekennzeichnet,**
**dass** die Funkstation einen Sender (T1) zum Senden von Informationen und/oder einen Empfänger (R1) zum Empfangen von Informationen auf dem ersten Frequenzband (FB1) aufweist, und
**dass** die Funkstation einen Sender (T2; T) zum zeitweiligen Senden von Informationen und einen Empfänger (R; R2) zum zeitweiligen Empfangen von Informationen auf dem zweiten Frequenzband (FB2), sowie einen Sende- Empfangsumschalter (T/R) aufweist.

9. Funkstation nach Anspruch 8, **dadurch gekennzeichnet, dass** sie als Basisstation (BS1, BS2) oder als Teilnehmerstation (MS) ausgestaltet ist.

10. Vorrichtung (RNC) in einem Funkkommunikationssystem zur Durchführung eines Verfahrens nach Anspruch 1,
mit Mitteln zum Zuweisen einer Übertragungsrichtung (UL; DL) für das zweite Frequenzband (FB2).
